# EUROPEAN PATENT APPLICATION

(11) **EP 3 611 698 A1**
(43) Date of publication of application: **19.02.2020**
(21) Application number: 19191329.2
(22) Date of filing: 12.08.2019
(51) Int. Cl.: G06T 7/00

(54) **AUTOMATED SUPERVISION AND INSPECTION OF ASSEMBLY PROCESS**

(30) Priority: 14.08.2018 US 201862718786 P; 11.09.2018 NL 2021599
(71) Applicant: The Boeing Company, Chicago, IL 60606-2016 (US)
(72) Inventor: Yu, Huafeng, CHICAGO, IL Illinois 60606-2016 (US); ReMine, Daniel S., CHICAGO, IL Illinois 60606-2016 (US); Staudinger, Tyler Charles, CHICAGO, IL Illinois 60606-2016 (US)
(74) Representative: Hylarides, Paul Jacques

(57) **Abstract**

A method and apparatus for performing automated supervision and inspection of an assembly process. The method is implemented using a computer system. Sensor data is generated at an assembly site using a sensor system positioned relative to the assembly site. A current stage of an assembly process for building an assembly at the assembly site is identified using the sensor data. A context for the current stage is identified. A quality report for the assembly is generated based on the sensor data and the context for the current stage.

## Description

### FIELD

The present disclosure relates generally to inspecting assembly sites. More particularly, the present disclosure relates to methods and systems for automated supervision and inspection of an assembly process at an assembly site.

### BACKGROUND

Complex structures, such as aircraft structures, may require the assembly of hundreds, thousands, tens of thousands, or even hundreds of thousands of components. The assembly of these types of complex structures may present certain challenges in the manufacturing environment. For example, different types or levels of inspections may be needed at various stages of the assembly process. One inspection step may include determining whether the parts being assembled at a particular stage are indeed the parts expected to be assembled. Another inspection step may include determining whether parts have been assembled in the correct location. Yet another inspection step may include determining whether parts have been assembled at the correct time during the assembly process. One inspection step may include determining whether the assembly of parts meets safety requirements, quality requirements, or both.

Some currently available methods of inspection involve manual inspection of assemblies by a human operator. But this type of manual inspection may be prone to human error and may be less accurate than desired. Further, manual inspection may take longer than desired and may be more expensive than desired. For example, when an undesired feature is identified via manual inspection, disassembly may be required in order to identify the cause of the undesired feature. This disassembly process may be more time-consuming and costly than desired. Thus, one or more apparatuses and methods for addressing the above-described issues may be desired.

### SUMMARY

In one example embodiment, a method is provided for performing automated supervision and inspection of an assembly process. The method is implemented using a computer system. Sensor data is generated at an assembly site using a sensor system positioned relative to the assembly site. A current stage of an assembly process for building an assembly at the assembly site is identified using the sensor data. A context for the current stage is identified. A quality report for the assembly is generated based on the sensor data and the context for the current stage.

In another example embodiment, a method is provided for performing automated supervision and inspection of an assembly process. The method is implemented using a computer system. Sensor data is generated at an assembly site using a sensor system positioned relative to the assembly site. A current stage of an assembly process for building an assembly at the assembly site is identified using the sensor data, assembly information stored in a data repository, and at least one of machine learning, deep learning, computer vision, a customized learning technique, computational learning, or artificial intelligence learning. A context is identified for the current stage. A quality report corresponding to the current stage of the assembly process is generated based on the sensor data and the context for the current stage. A record corresponding to the current stage of the assembly process is stored in the data repository to thereby build a history of records for the assembly process. The record includes at least a portion of the sensor data and the quality report.

In another example embodiment, a system for automated supervision and inspection of an assembly process includes a sensor system and a computer system. The sensor system is positioned relative to an assembly site and an assembly being built at the assembly site. The computer system identifies a current stage of the assembly process for building the assembly at the assembly site based on sensor data generated by the sensor system; identifies a context for the current stage; and generates a quality report for the assembly based on the sensor data and the context for the current stage.

The features and functions may be achieved independently in various embodiments of the present disclosure or may be combined in yet other embodiments in which further details may be seen with reference to the following description and drawings.

### BRIEF DESCRIPTION OF THE DRAWINGS

The novel features believed characteristic of the example embodiments are set forth in the appended claims. The example embodiments, however, as well as a preferred mode of use, further objectives and features thereof, will best be understood by reference to the following detailed description of example embodiments when read in conjunction with the accompanying drawings, wherein:
**Figure 1** is a block diagram of a manufacturing environment in accordance with an example embodiment.
**Figure 2** is a block diagram of the training manager and data repository from **Figure 1** in accordance with an example embodiment.
**Figure 3** is a block diagram of the assembly manager from **Figure 1** in accordance with an example embodiment.
**Figure** 4 is an illustration of an assembly site in accordance with an example embodiment.
**Figure 5** is a flowchart of a process for performing automated supervision and inspection of an assembly process in accordance with an example embodiment.
**Figure 6** is a flowchart of a process for performing automated supervision and inspection of an assembly process in accordance with an example embodiment.
**Figure** 7 is a flowchart of a process for identifying a current stage of an assembly process in accordance with an example embodiment.
**Figure 8** is a flowchart of a process for performing a rollback verification in accordance with an example embodiment.
**Figure 9** is a flowchart of a process for automated supervision and inspection of an assembly process in accordance with an example embodiment.
**Figure 10** is a block diagram of a data processing system in accordance with an example embodiment.
**Figure 11** is an illustration of an aircraft manufacturing and service method in accordance with an illustrative embodiment in accordance with an example embodiment.
**Figure 12** is a block diagram of an aircraft in accordance with an example embodiment.

### DETAILED DESCRIPTION

The example embodiments described below provide methods and systems for automating the supervision and inspection of an assembly process at an assembly site. These methods and systems use machine learning, computer vision, and other artificial intelligence technologies to automate supervision and inspection of the assembly process. Further, these methods and systems provide an automated way of identifying that parts are assembled according to predefined quality requirements, in the right locations, and at the correct times during the assembly process.

The automated supervision and inspection system provided by the example embodiments improves quality control of an assembly process in a manner that reduces the need for human intervention in the inspection process. By reducing this need for human intervention, human-related errors may be reduced. Further, the automated supervision and inspection system provides cost- and time-savings. For example, the automated supervision and inspection system provides a method for identifying the root cause of an issue without requiring extensive disassembly or reversal of actual assembly steps.

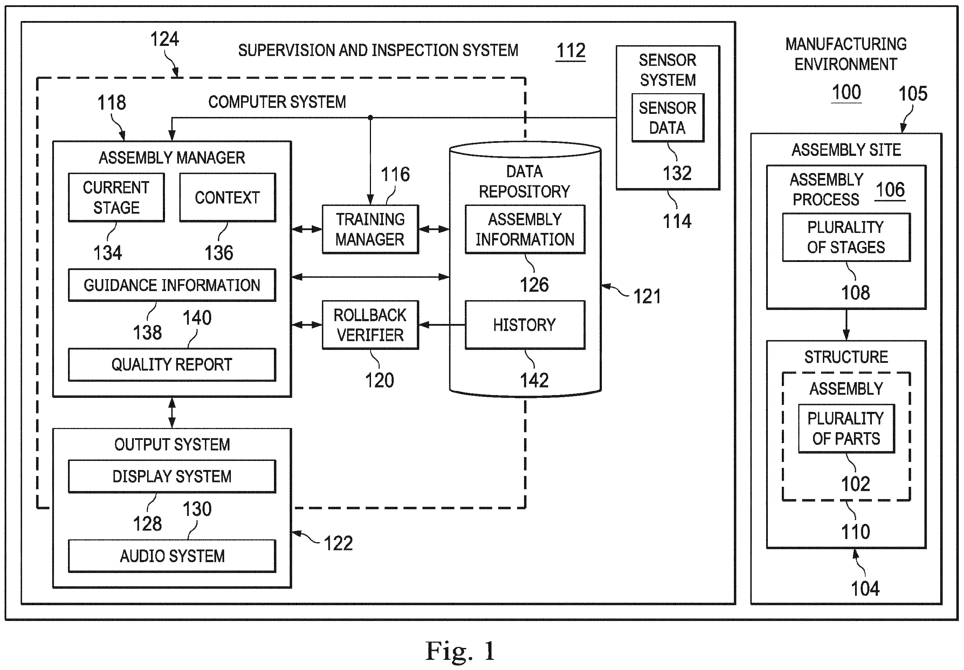

**Figure 1** **is** a block diagram of a manufacturing environment in accordance with an example embodiment. Manufacturing environment **100** is an example of one type of manufacturing environment in which plurality of parts **102** may be assembled to form structure **104**. Structure **104** may take a number of different forms. For example, structure **104** may be an aircraft, a wing, a wing structure, a fuselage, a fuselage structure, a frame, a stabilizer, or some other type of structure **104.** In some cases, a part of plurality of parts **102** may also be referred to as a piece, a component, an element, a member, or some other type of unit.

Plurality of parts **102** may be assembled at assembly site **105** within manufacturing environment **100**. In some illustrative examples, assembly site **105** may be one of multiple assembly sites within manufacturing environment **100**. Assembly site **105** may include, for example, a ground area, a platform, scaffolding, or some other type of site on which plurality of parts **102** is assembled.

Plurality of parts **102** may be assembled to form structure **104** according to assembly process **106**. Assembly process **106** may include plurality of stages **108**. As used herein, a stage of plurality of stages **108** may be a single stage of assembly process **106**, a sequence of stages, a sequence of sub-stages, a stage in a sub-assembly process, a step in assembly process **106** or a sub-assembly process, or two or more steps to be performed in parallel during assembly process **106**. At any given stage of assembly process **106**, prior to and up to completion, structure **104** may be referred to as assembly **110**. In some cases, assembly **110** may also be referred to as a "build."

Supervision and inspection system **112** is used to supervise assembly process **106** and to perform inspections during assembly process **106**. Supervision and inspection system **112** may be an automated system. In particular, supervision and inspection system **112** automates the supervision of assembly process **106** and automates inspections during assembly process **106** to reduce or, in some cases, even eliminate the need for human intervention.

In these illustrative examples, supervision and inspection system **112** includes sensor system **114**, training manager **116**, assembly manager **118**, rollback verifier **120**, data repository **121**, and output system **122**. Sensor system **114** may include any number of or combination of sensors. For example, sensor system **114** may include at least one of an imaging device, a radar sensor, a sonar sensor, a light detection and ranging (LiDAR) sensor, an infrared (IR) sensor, or some other type of sensor. An imaging device may include, for example, without limitation, a camera, a stereo camera, a video camera, an infrared camera, some other type of imaging device, or a combination thereof. In one illustrative example, sensor system **114** includes a set of imaging systems, each imaging system including one or more imaging devices. A set of items, such as a set of imaging systems, may include one or more items.

Training manager **116**, assembly manager **118**, and rollback verifier **120** may be implemented using software, hardware, firmware, or a combination thereof. When software is used, the operations performed by each of training manager **116**, assembly manager **118**, or rollback verifier **120** may be implemented using, for example, without limitation, program code configured to run on a processor unit. When firmware is used, the operations performed by each of training manager **116**, assembly manager **118**, or rollback verifier **120** may be implemented using, for example, without limitation, program code and data and stored in persistent memory to run on a processor unit.

When hardware is employed, the hardware may include one or more circuits that operate to perform the operations performed by each of training manager **116**, assembly manager **118**, or rollback verifier **120**. Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In these illustrative examples, assembly manager **118** and rollback verifier **120** may be implemented using computer system **124**. Computer system **124** may include a single computer or multiple computers in communication with each other. In some embodiments, computer system **124** may include a laptop, a tablet, a smartphone, or some other type of mobile device.

In some embodiments, a portion of computer system **124** may be located remotely with respect to another portion of computer system **124.** For example, computer system **124** may include a computer positioned at or around assembly site **105** within manufacturing environment **100** and a server system located remotely with respect to the computer. The server system may be located within or outside of manufacturing environment **100**. In some cases, training manager **116** may be implemented using a first computer, assembly manager **118** may be implemented using a second computer, and rollback verifier **120** may be implemented using a third computer. Thus, computer system **124** may be used in a number of different ways to implement assembly manager 1**18** and rollback verifier **120**.

Data repository **121** may include one or more databases, associative memory, some other type of data structure, or a combination thereof. Data repository **121** may be in communication with training manager **116**, assembly manager **118**, rollback verifier **120**, or a combination thereof. Data repository **121** may be part of computer system **124** in some examples. In some examples, data repository **121** or at least a portion of data repository **121** is located remotely with respect to assembly site **105**.

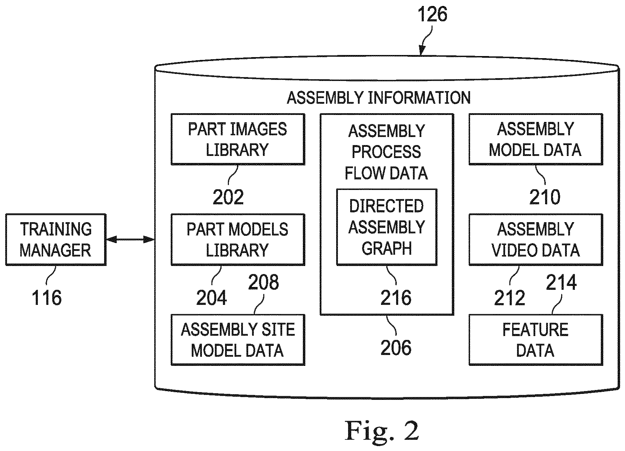

Data repository **121** stores assembly information **126**. Examples of the types of assembly information **126** that may be stored in data repository **121** are described in **Figure 2** below.

Output system **122** may be in communication with training manager **116**, assembly manager **118**, rollback verifier **120**, or a combination thereof. Output system **122** may include one or more output devices. In some illustrative examples, a portion or all of output system **122** may be considered part of computer system **124**. In these illustrative examples, output system **122** may include at least one of display system **128**, audio system **130**, or some other type of output device. Display system **128** may include, for example, at least one of a screen, a touchscreen, a monitor, a head-mounted display device, or some other type of display device. Audio system **130** may include, for example, at least one of a microphone, a speaker, or some other type of audio device.

Sensor system **114** may be used to generate sensor data **132** before assembly process **106**, during assembly process **106,** or both. Sensor data **132** may include two-dimensional (2D) imaging data, three-dimensional (3D) imaging data, one or more other types of sensor data, or a combination thereof. Sensor data **132** is sent to training manager **116** and assembly manager **118** for processing. In some illustrative examples, a portion or all of sensor data **132** is stored in data repository **121**.

Before assembly process **106** begins, training manager **116** uses assembly information **126**, and, optionally, sensor data **132**, to train assembly manager **118** to identify the various parts of plurality of parts **102** to be assembled to form structure **104** and the various stages of plurality of stages **108**. Additionally, training manager **116** uses assembly information **126**, and, optionally, sensor data **132**, to train assembly manager **118** to assess quality metrics for assembly **110**.

Assembly manager **118** processes sensor data **132** to identify current stage **134** of assembly process **106**. Assembly manager **118** then identifies context **136** for current stage **134**. Context **136** may include, for example, at least one of a nominal condition for assembly **110** at current stage **134**, a nominal condition for each part expected to be present at current stage **134**, selected tolerances for the nominal condition for assembly **110** at current stage **134**, selected tolerances for the quality metrics pre-identified for assembly **110**, an identification of step(s) completed prior to current stage **134**, an identification of step(s) to be completed during current stage **134**, an identification of next step(s) to be completed after current stage **134**, or other information.

Context 136 may include information that a human operator would be either completely unable to identify or would be unable to quickly and easily identify based on viewing or visualizing assembly site 105. For example, when assembly process 106 includes a multitude of stages, a human operator may be unable to readily identify current stage 134 or the selected tolerances for the quality metrics pre-identified for assembly 110 for current stage 134, the step(s) completed prior to current stage 134, the step(s) to be completed during current stage 134, or next step(s) to be completed after current stage 134.

Based on context **136** identified for current stage **134**, assembly manager **118** may output guidance information **138** via output system **122**. Guidance information **138** may include, for example, a listing of the steps to be performed during current stage **134**, a listing of next steps to be performed after current stage **134**, or both. Guidance information **138** is used to inform one or more human operators on the tasks to be performed during assembly process **106**.

Further, based on context **136** identified for current stage **134**, assembly manager **118** may evaluate assembly **110** at current stage **134** and generate quality report **140**. Quality report **140** may also be referred to as a quality assessment. Quality report **140** indicates whether any relevant issues of interest relating to the quality of assembly **110** are present.

For each stage of assembly process **106** identified by assembly manager **118**, assembly manager **118** stores the corresponding quality report **140** in data repository **121** to build history **142** of reports for the assembly process **106**. If at current stage **134**, assembly manager **118** detects an issue of interest, rollback verifier **120** may roll back through the history **142** of quality reports stored in data repository **121** in reverse order to identify the root cause of the issue of interest.

**Figure 2** is a block diagram of training manager **116** and data repository **121** from **Figure 1** in accordance with an example embodiment. Before assembly process **106** from **Figure 1** is performed at assembly site **105**, training manager **116** uses assembly information **126** stored in data repository **121** to train assembly manager **118** in **Figure 1** to evaluate each of plurality of stages **108** in **Figure 1****.**

Training manager **116** may use any number of algorithms and techniques to perform this training. For example, training manager **116** may use at least one of machine learning, deep learning, computer vision, some other type of computational learning, some other type of artificial intelligence learning, or a combination thereof.

Assembly information **126** stored in data repository **121** may include various types of information. For example, assembly information **126** may include part images library **202**, part models library **204**, assembly process flow data **206**, assembly site model data **208**, assembly model data 210, and assembly video data **212**, feature data **214**, or a combination thereof.

Part images library **202** may include, for example, one or more images for at least a portion of the parts of plurality of parts **102** in **Figure 1****.** In some cases, part images library **202** may include an image for each of plurality of parts **102**. In these illustrative examples, part images library **202** may also include images of parts captured from previously completed assembly processes.

Part models library **204** may include, for example, one or more models for at least a portion of the parts of plurality of parts **102** in **Figure 1****.** In some cases, part models library **204** may include a model for each of plurality of parts **102**. A model of a part may be, for example, a computer-aided design (CAD) model.

Assembly process flow data **206** may include information about the flow or sequence of plurality of stages **108** in assembly process **106** from **Figure 1****.** In one illustrative example, assembly process flow data **206** takes the form of directed assembly graph **216** that represents the flow or sequence according to which plurality of stages **108** of assembly process **106** should progress. In some cases, this directed assembly graph **216** may include sub-flows representing sub-stages that act in parallel with each other.

Assembly site model data **208** may include, for example, a baseline model of assembly site **105** from **Figure** 1 and updates to the baseline model for each of plurality of stages **108** of assembly process **106**. In some illustrative examples, assembly site model data **208** includes a model of assembly site **105** for each stage of plurality of stages **108**. The models included in assembly site model data **208** may be, for example, three-dimensional models. Further, in some cases, these models may include representations of the parts involved in and already part of each stage of plurality of stages **108.** In other cases, the models are linked to the CAD models of the parts.

Assembly model data **210** may include any number of models that represent the various states of assembly **110** in plurality of stages **108**. In one illustrative example, assembly model data **210** includes a baseline model for assembly **110** at a first stage of plurality of stages **108** and updates to the baseline model reflecting the addition of one or more parts to assembly **110** at each of plurality of stages **108**. Assembly video data **212** may include a video of the entire assembly process **106** or multiple videos for the various stages of assembly process **106** captured during a previously performed assembly process **106**.

Feature data **214** may include information about various features. Features may include cracks, dents, twists, a surface level feature, other types of features, or a combination thereof. Feature data **214** may include images of these features. In these illustrative examples, feature data **214** includes selected tolerances for each of the features. As one illustrative example, feature data **214** may include selected tolerances for a length of crack, selected tolerances for a depth of a dent, and other types of selected tolerances.

In these illustrative examples, training manager **116** may use sensor data **132** that is generated over time to update assembly information **126**. This type of updating improves the overall accuracy and efficiency with which analysis of sensor data **132** may be performed.

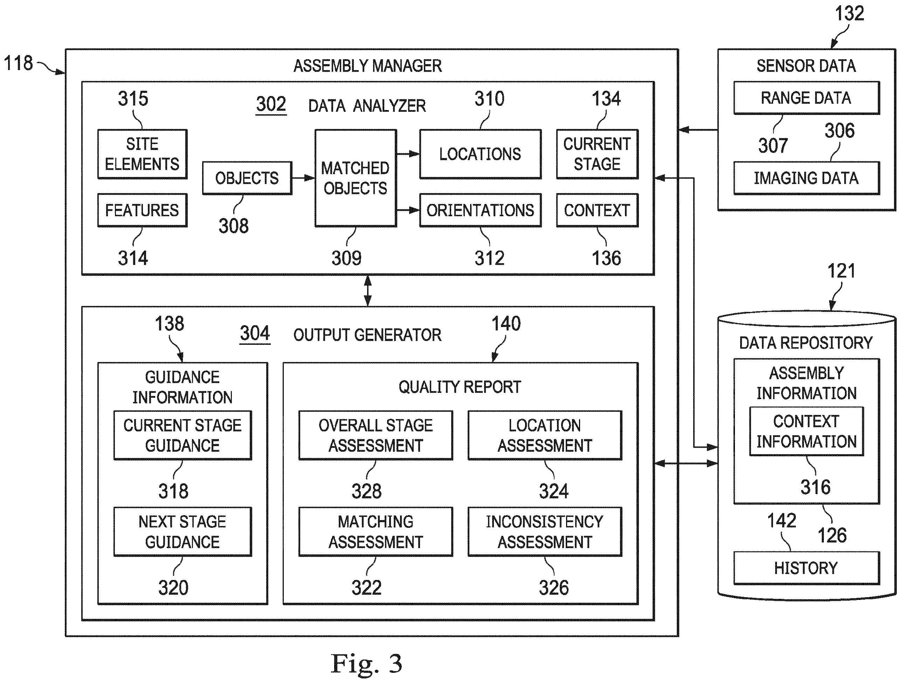

**Figure 3** is a block diagram of assembly manager **118** from **Figure 1** in accordance with an example embodiment. Assembly manager **118** may include data analyzer **302** and output generator **304**.

Data analyzer **302** uses sensor data **132** and assembly information **126** stored in data repository **121** to identify each stage of plurality of stages **108** during assembly process **106**. For example, at any given point in time during assembly process **106**, data analyzer **302** may use any number of algorithms or techniques to identify current stage **134** of assembly process **106**.

In one illustrative example, sensor data **132** includes imaging data **306**, range data **307**, or both for assembly site **105**. Imaging data **306** includes two-dimensional images, three-dimensional images, video, or a combination thereof of assembly site **105**. Range data **307** may include data from at least one of a radar sensor, a LiDAR sensor, an infrared sensor, or some other type of sensor.

In these illustrative examples, data analyzer **302** may use at least one of machine learning, deep learning, computer vision, a customized learning technique, some other type of computational learning, some other type of artificial intelligence learning, or a combination thereof in combination with assembly information **126** to detect and identify objects **308** using imaging data **306**, range data **307**, or both. In some illustrative examples, data analyzer 302 may use only two-dimensional imaging data to detect and identify objects **308**.

Data analyzer **302** matches the detected objects **308** to parts based on assembly information **126**. For example, data analyzer **302** may use part images library **202**, part models library **204**, or both to match objects **308** to parts. This matching may be performed based on, for example, form, size, color, identifying marks, or some other type of point of comparison.

Once objects **308** are part-matched, they may be referred to as matched objects **309**. In some cases, not all of objects **308** are able to be matched to corresponding parts. Thus, matched objects **309** may include all or a subset of objects **308**.

Data analyzer **302** identifies locations **310** and orientations **312** of matched objects **309** with respect to a reference coordinate system for assembly site **105**. For example, data analyzer **302** may first identify locations **310** of matched objects **309** in a particular image. Data analyzer **302** may synchronize a viewpoint from which that image was generated to a corresponding location of the imaging device that generated the image relative to a model of assembly site **105**. Ray tracing or some other technique may be used to then determine the location of each matched object. The orientation of that matched object may then be determined. In other illustrative examples, data analyzer **302** identifies locations **310** and orientations **312** of matched objects **309** relative to a reference coordinate system for assembly **110**.

Data analyzer **302** may identify one or more features **314** in imaging data **306**. Features **314** may be features of a particular part, surface, or other portion of assembly **110**. Features **314** may include, for example, without limitation, cracks, dents, twists, a surface level feature, or some other type of feature. A surface level feature may be, for example, a level of flushness, a level of smoothness, or some other type of surface feature. A feature may be considered an undesired feature or inconsistency when that feature is outside of selected tolerances.

Data analyzer **302** may use at least one of machine learning, deep learning, computer vision, a customized learning technique, some other type of computational learning, some other type of artificial intelligence learning, or a combination thereof in in combination with assembly information **126** to detect and identify objects **308** in imaging data **306**.

In some illustrative examples, data analyzer **302** also identifies site elements **315** in imaging data **306**. Site elements **315** may include tools, identifying marks, labels, robots, and elements other than parts that may be present at assembly site **105**.

Using some combination of the identification of matched objects **309**, locations **310** of matched objects **309**, orientations **312** of matched objects **309**, and site elements **315**, data analyzer **302** is then able to identify current stage **134** of assembly process **106**. For example, data analyzer **302** may use assembly information **126** in combination with the above information to identify current stage **134**. More specifically, data analyzer **302** may use assembly process flow data **206**, assembly site model data **208,** assembly model data **210,** assembly video data **212**, some other type of information, or a combination thereof from **Figure 2** to identify current stage **134**. In some cases, the identification of current stage **134** may be referred to as an assembly localization calibration or an assembly stage calibration.

Once current stage **134** has been identified, data analyzer **302** uses context information **316** stored in data repository **121** to identify context **136** for current stage **134**. Context information **316** may also include a portion of assembly information **126**. For example, context information **316** may include quality metrics for each stage of plurality of stages **108** of assembly process **106.**

As discussed above, context **136** for current stage **134** may include at least one of a nominal condition for assembly **110** at current stage **134**, a nominal condition for each part expected to be present at current stage **134**, selected tolerances for the nominal condition for assembly **110** at current stage **134**, selected tolerances for the quality metrics pre-identified for assembly **110**, an identification of step(s) completed prior to current stage **134**, an identification of step(s) to be completed during current stage **134**, an identification of next step(s) to be completed after current stage **134**, or other information.

Once context **136** has been identified, output generator **304** generates guidance information **138** and quality report **140**. Guidance information **138** is used to inform the one or more human operators involved in assembly process **106**. Guidance information **138** may include, for example, current stage guidance **318**, next stage guidance **320**, or both.

Current stage guidance **318** may include, for example, a listing of the steps to be performed during current stage **134**. In some cases, current stage guidance **318** includes instructions on how to perform certain tasks for current stage **134**. Current stage guidance **318** may include one or more images, video, or both to help guide a human operator on how to perform a particular task. Guidance information **138** may be displayed through display system **128** from **Figure 1**. In some cases, current stage guidance **318** includes audio guidance, such as audio instructions on how to perform certain tasks during current stage **134** of assembly process **106**. These audio instructions may be played for a human operator through audio system **130** from **Figure 1**.

Next stage guidance **320** may include, for example, a listing of the steps to be performed during a next stage that will follow current stage **134**. Data analyzer **302**, output generator **304**, or both may identify this next stage using, for example, directed assembly graph **216** from **Figure 2**. In some illustrative examples, next stage guidance **320** includes instructions on how to perform certain tasks for the next stage. Next stage guidance **320** may include one or more images, video, or both to help guide a human operator on how to perform a particular task.

Guidance information **138** may be presented to a human operator through output system **122** described in **Figure 1****.** For example, guidance information **138** may be displayed through display system **128** from **Figure 1**. In some cases, current stage guidance **318** may include audio guidance, such as audio instructions on how to perform certain tasks during current stage **134** of assembly process **106.** These audio instructions may be played for a human operator through audio system **130** from **Figure 1**.

Further, based on context **136** identified for current stage **134**, matched objects **309**, locations **310**, orientations **312**, and site elements **315**, output generator **304** evaluates assembly **110** at current stage **134** and generates quality report **140**. Quality report **140** indicates whether any relevant issues of interest relating to the quality of assembly **110** are present. For example, quality report **140** includes at least one of matching assessment **322**, location assessment **324,** inconsistency assessment **326**, or some other type of assessment.

Matching assessment **322** may indicate whether one or more of objects **308** were unable to be matched to a corresponding part. In some illustrative examples, matching assessment **322** may also indicate whether one or more of matched objects **309** do not match the parts expected to be present at current stage **134** of assembly process **106**. Location assessment **324** indicates whether matched objects **309** have been assembled in the correct or incorrect locations relative to assembly **110**. Inconsistency assessment **326** indicates if features **314** have been identified and if so, whether features **314** are outside of selected tolerances. Data analyzer **302**, output generator **304**, or both may use feature data **214** from **Figure 2** to determine whether features **314** are outside of selected tolerances.

In some cases, quality report **140** may include overall stage assessment **328**. Overall stage assessment **328** may be, for example, an indication of whether current stage **134** is progressing within selected tolerances. In some cases, overall stage assessment **328** may be a grade selected from one of "pass," "borderline," and "fail."

Quality report **140** may be presented to a human operator via output system **122** in different ways. In one illustrative example, quality report **140** may be presented using graphical indicators overlaid on an image of assembly site **105** or assembly **110** displayed in display system **128.** For example, objects identified in the image that have been matched to correct parts and to correct locations and orientations may be indicated with a first type of graphical indicator (e.g., green circle around the object, green arrow, etc.). Objects identified in the image that have been mismatched, are in the wrong locations, or have the wrong orientations may be indicated with a second type of graphical indicator (e.g., red circle around the object, red arrow, etc.). As described above, a mismatched object may be one that matched to a part that should not be present at current stage **134** or that did not match to any part.

Sensor data **132** and the various pieces of information generated by assembly manager **118** are stored in data repository **121**. For example, stage record **330** may be stored in data repository **121** in association with current stage **134**. Stage record **330** may include sensor data **132**, an identification of objects **308**, an identification of matched objects **309**, locations **310**, orientations **312**, and quality report **140**. In some cases, stage record **330** may include guidance information **138**. Once stored in data repository **121**, stage record **330** becomes part of history **142**. Thus, this type of history **142** of records includes a record for each stage of plurality of stages **108** identified and analyzed.

The illustrations in **Figures 1-3** are not meant to imply physical or architectural limitations to the manner in which an example embodiment may be implemented. Other components in addition to or in place of the ones illustrated may be used. Some components may be optional. Further, the blocks are presented to illustrate some functional components. One or more of these blocks may be combined, divided, or combined and divided into different blocks when implemented in a different example embodiment.

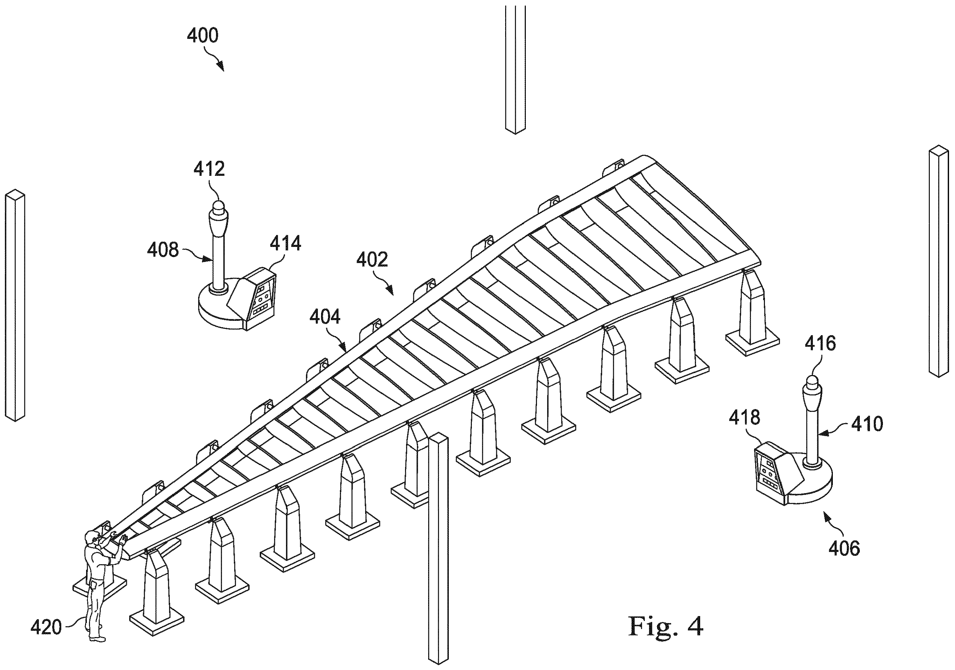

**Figure 4** is an illustration of an assembly site in accordance with an example embodiment. Assembly site **400** may be an example of one implementation for assembly site **105** described in **Figure 1****.** Wing assembly **402** is being built at assembly site **400** to ultimately form a wing. Wing assembly **402** is an example of one implementation for assembly **110** described in **Figure 1****.** Wing assembly **402** is comprised of plurality of parts **404**.

As depicted, supervision and inspection system **406** is at least partially present at assembly site **400**. Supervision and inspection system **406** is an example of one implementation for supervision and inspection system **112** in **Figure 1**. Supervision and inspection system **406** includes inspection platform **408** and inspection platform **410**. In this illustrative example, inspection platform **408** and inspection platform **410** may be implemented using stationary platforms. In other illustrative examples, inspection platform **408** and inspection platform **410** may be implemented using mobile platforms. Although only two platforms are shown in **Figure 4**, any number of platforms may be present at assembly site **400**.

In this illustrative example, inspection platform **408** includes rotating camera **412** and control system **414**. Similarly, inspection platform **410** includes rotating camera **416** and control system **418**. Rotating camera **412** and rotating camera **416** are an example of one implementation for sensor system **114** in **Figure 1**. Rotating camera **412** and rotating camera **416** may generate two-dimensional images. In other illustrative examples, inspection platform **408** and inspection platform **410** may be outfitted with three-dimensional camera systems, LiDAR sensor systems, or other types of sensors.

Control system **414** and control system **418** may each include a processor, memory, and communications units. Control system **414** and control system **418** may control the operation of rotating camera **412** and rotating camera **416**, respectively. Further, control system **414** and control system **418** may process the imaging data generated by these cameras and send the processed data to a remote computer system (e.g., computer system **124** in **Figure 1**) for further processing. In other illustrative examples, the processors of control system **414** and control system **418** communicate with each other as part of computer system **124** described in **Figure 1**.

In some cases, a lighting device (not shown) may be attached to or integral with each of inspection platform **408** and inspection platform **410**. The lighting device may help rotating camera **412** and rotating camera **416** to capture higher quality images.

The imaging data generated by rotating camera **412** and rotating camera **416** includes images of assembly site **400** and wing assembly **402** that are used to perform automated inspections during the building of wing assembly **402**. Further, the imaging data is used to provide guidance to human operator **420** based on the current stage of assembly.

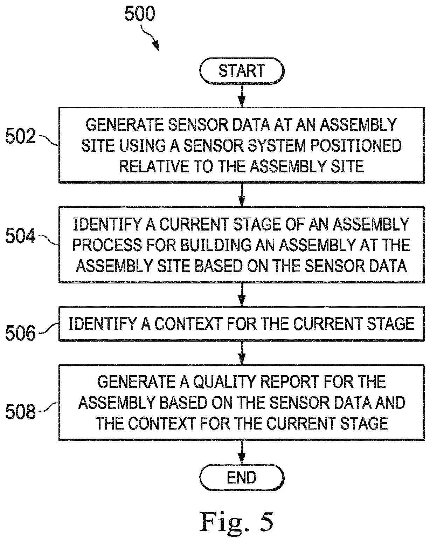

**Figure 5** is a flowchart of a process for performing automated supervision and inspection of an assembly process in accordance with an example embodiment. Process **500** illustrated in **Figure 5** may be performed using supervision and inspection system **112** described in **Figures 1-3**. Process **500** may be used to automate the supervision and inspection of assembly process **106** at assembly site **105** in **Figure 1****.**

Process **500** may begin by generating sensor data at an assembly site using a sensor system positioned relative to the assembly site (operation **502**). In one illustrative example, the sensor system includes a plurality of cameras that are positioned relative to the assembly site and the assembly being built at the assembly site. In some cases, one or more of the cameras may be rotating cameras.

A current stage of an assembly process for building the assembly at the assembly site is identified using the sensor data (operation **504**). Thereafter, a context is identified for the current stage of the assembly process (operation **506**). As described above, a stage of the assembly process may be a single stage, a sequence of stages, a sequence of sub-stages, a stage in a sub-assembly process, a step in the assembly process, a step in a sub-assembly process, or two or more steps or sub-stages to be performed in parallel during the assembly process.

A quality report is then generated for the assembly based on the sensor data and the context for the current stage (operation **508**), with the process terminating thereafter. The quality report is an automated report that includes assessments indicating whether at least one issue of interest is present. The issue of interest may be an improper part, an improper part location, an improper orientation, a crack, a dent, a twist, a surface inconsistency, or a combination thereof. Process **500** may be repeated for each stage of the assembly process.

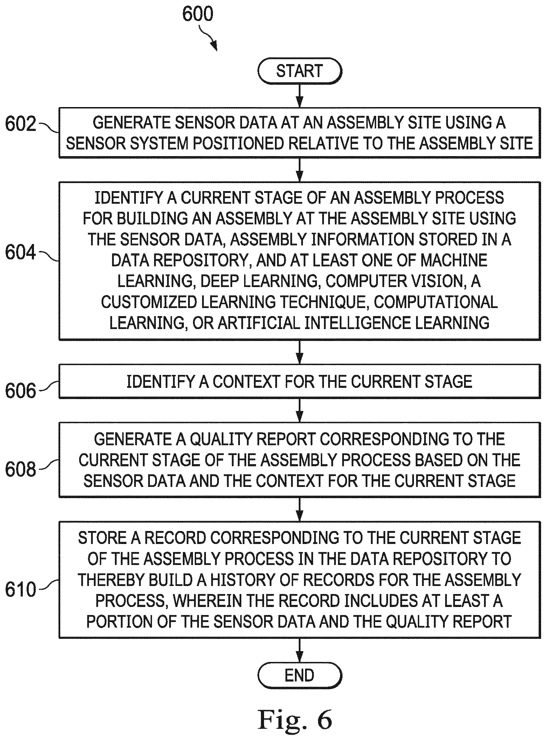

**Figure 6** is a flowchart of a process for performing automated supervision and inspection of an assembly process in accordance with an example embodiment. Process **600** illustrated in **Figure 6** may be performed using supervision and inspection system **112** described in **Figures 1-3**. Process **600** may be used to automate the supervision and inspection of assembly process **106** at assembly site **105** in **Figure 1**.

Process **600** begins by generating sensor data at an assembly site using a sensor system positioned relative to the assembly site (operation **602**). In these illustrative examples, the sensor system includes multiple cameras that are placed in predetermined, fixed positions relative to the assembly being built at the assembly site. These positions are selected to provide images that provide the most information and optimal angles for evaluating the assembly process. The cameras may generate images, video, or both.

Next, a current stage of the assembly process for building an assembly at the assembly site is identified using the sensor data, assembly information stored in a data repository, and at least one of machine learning, deep learning, computer vision, a customized learning technique, computational learning, or artificial intelligence learning (operation **604**). Thereafter, a context is identified for the current stage (operation **606**).

A quality report corresponding to the current stage of the assembly process is generated based on the sensor data and the context for the current stage (operation **608**). A record corresponding to the current stage of the assembly process is stored in the data repository to thereby build a history of records for the assembly process (operation **610**), with the process terminating thereafter. The record includes at least a portion of the sensor data and the quality report.

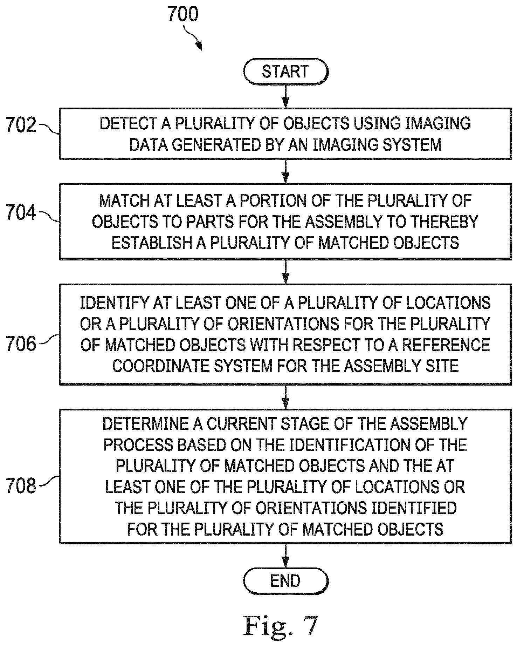

**Figure 7** is a flowchart of a process for identifying a current stage of an assembly process in accordance with an example embodiment. Process **700** illustrated in **Figure 7** may be performed using supervision and inspection system **112** described in **Figures 1-3**. More particularly, process **700** may be performed using assembly manager **118** described in **Figures 1** and 3.

Process **700** begins by detecting a plurality of objects using imaging data generated by an imaging system (operation **702**). The imaging system may include one or more cameras positioned relative to an assembly site and an assembly at the assembly site.

Next, at least a portion of the plurality of objects is matched to parts for the assembly to thereby establish a plurality of matched objects (operation **704**). Operation **704** may be performed using at least one of images of the parts or models of the parts. For example, operation **704** may be performed using part images library **202** and part models library **204** in **Figure 2**. In operation **704**, each object is compared to known parts for the assembly and is either matched to a known part or flagged as unmatched. In these illustrative examples, matching at least a portion of the plurality of objects to known parts for the assembly may be performed using at least one of machine learning, deep learning, computer vision, a customized learning technique, computational learning, or artificial intelligence learning.

Thereafter, at least one of a plurality of locations or a plurality of orientations is identified for the plurality of matched objects with respect to a reference coordinate system for the assembly site (operation **706**). For example, for each object matched to a known part for the assembly being built, a location, an orientation, or both relative to a reference coordinate system for the assembly site is computed. In some illustrative examples, the reference coordinate system may be with respect to the assembly itself. The locations of the matched objects may be identified by using the known positions of the cameras relative to the assembly site and thus, the known positions of the cameras with respect a model (e.g., CAD model) of the assembly or the assembly site).

The current stage of the assembly process is determined based on the identification of the plurality of matched objects and the at least one of the plurality of locations or the plurality of orientations identified for the plurality of matched objects (operation **708**), with the process terminating thereafter. Operation **708** may be performed by comparing the locations, orientations, or both of the matched objects to models of the assembly at various stages during the assembly process, models of the assembly site at various stages during the assembly process, or both. Assembly process flow data **206**, assembly site model data **208,** assembly model data **210**, assembly video data **212**, or a combination thereof, from **Figure 2**, may be used to determine the current stage of the assembly process.

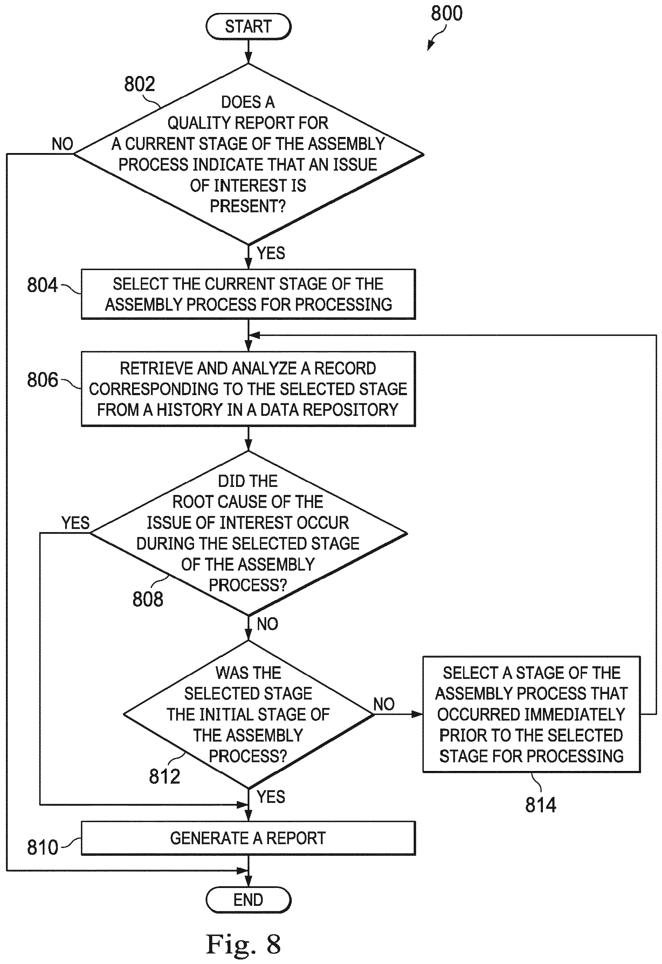

**Figure 8** is a flowchart of a process for performing a rollback verification in accordance with an example embodiment. Process **800** illustrated **in** **Figure 8** may be performed using supervision and inspection system **112** described in **Figures 1-3**. More particularly, process **800** may be performed using rollback verifier **120** described in **Figure 1**.

Process **800** may begin by determining whether a quality report for a current stage of the assembly process indicates that an issue of interest is present (operation **802**). The issue of interest may be one of an improper part, an improper part location, an improper orientation, a crack, a dent, a twist, a surface inconsistency, or some other type of issue of interest. An improper part means that the wrong part has been added to the assembly. An improper part location may mean that a correct part has been assembled or added to the assembly at the wrong location. An improper orientation may mean that a correct part has the wrong orientation relative to the assembly.

If an issue of interest is not present, the process terminates. Otherwise, if an issue of interest is present, the current stage of the assembly process is selected for processing (operation **804**). A record corresponding to the selected stage is retrieved from a history in a data repository and analyzed (operation **806**).

Thereafter, a determination is made as to whether the root cause of the issue of interest occurred during the selected stage of the assembly process (operation **808**). If the root cause occurred during the selected stage of the assembly process, a report is generated (operation **810**), with the process terminating thereafter. The report may be an alert or a notice of information regarding the issue of interest. In some cases, the report includes images, video, or both to better inform a human operator about the issue.

If, however, the root cause did not occur during the selected stage of the assembly process, a determination is made as to whether the selected stage was the initial stage of the assembly process (operation **812**). If the selected stage was the initial stage of the assembly process, the process proceeds to operation **810** described above. Here, the report may take the form of a notification, an alert, or a substantive report indicating that the root cause could not be identified.

If the selected stage was not the initial stage of the assembly process, then a stage of the assembly process that occurred immediately prior to the selected stage is selected for processing (operation **814**), with the process then returning to operation **806** as described above. In this manner, process **800** rolls back through the history of records stored in the data repository in an efficient manner. Information about prior assembly steps may be analyzed and evaluated without requiring human intervention or requiring extensive disassembly (e.g., a reversal of the assembly steps already performed).

Accordingly, this type of rollback verification allows automated inspection and quality control of the assembly process in a manner that may be too difficult or time-consuming for a human operator to perform. A human operator might have to reverse the assembly process and disassemble a portion of the assembly in order to identify a root case of an issue. However, the rollback verification process described above is an automated method for identifying the root cause of an issue that occurred prior to the current stage of assembly easily, quickly, and efficiently.

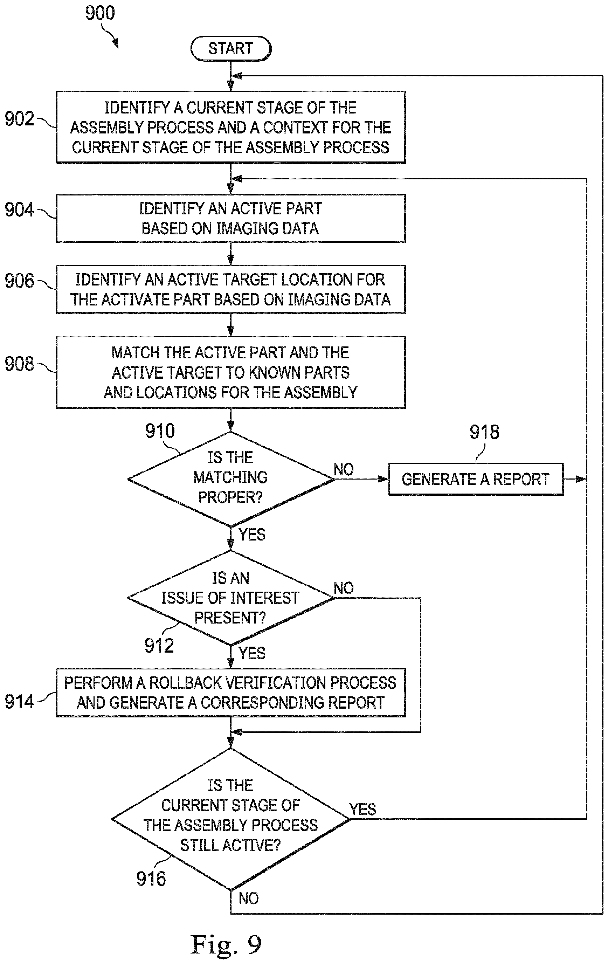

**Figure 9** is a flowchart of a process for automated supervision and inspection of an assembly process in accordance with an example embodiment. Process **900** illustrated in **Figure 9** may be performed using supervision and inspection system **112** described in **Figures 1-3**.

Process **900** may begin by identifying a current stage of the assembly process and a context for the current stage of the assembly process (operation **902**). Next, an active part is identified based on imaging data (operation **904**). The imaging data may be generated by one or more cameras in fixed positions relative to an assembly site. The active part may be, for example, the part being held by a human operator or a robot for installation. The identification performed in operation **904** may be performed using machine learning, computer vision, or other types of learning techniques.

Thereafter, an active target location is identified for the active part based on imaging data (operation **906**). The active target location may be identified using machine learning, computer vision, or other types of learning techniques and 3D models of the assembly site or the assembly to be built. In some illustrative examples, the target location may be identified through proximity-based detections combined with active-assembly detections once the operator begins the task of installing the part.

Next, the active part and the active target location are matched to known parts for the assembly (operation **908**). A determination is made as to whether this matching is proper (operation **910**). The match may be considered proper when the combination of the active part and the active target location are correct for the current stage of the assembly process.

If the match is proper, imaging data is used to determine whether an issue of interest is present (operation **912**). This determination may be made based on machine learning, computer vision, or other types of learning algorithms. In operation **912**, the determination is made based on known types of issues and predefined quality metrics.

If an issue is present, a rollback verification process is performed to identify the root cause of the issue and a corresponding report is generated (operation **914**). The process then determines whether the current stage of the assembly process is still active (operation **916**). The current stage is considered still active if there are additional steps or tasks to be performed as part of this stage of the assembly process. If the current stage is still active, the process returns to operation **904** described above. Otherwise, the process returns to operation **902** described above.

With reference again to operation **912**, if no issue of interest is present, the process proceeds to operation **916**. With reference again to operation **910**, if the match is not proper, a report is generated (operation **918**), with the process then proceeding to operation **904** as described above. This allows the human operator or robot to select either a new active part or a new active target location.

By returning to operation **902** after operation **918**, the process may "advance" the active stage of the assembly process and use a new context for decision-making. When there is no next stage to advance to, the assembly process is complete. Thus, the process iterates until the assembly process has been completed.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

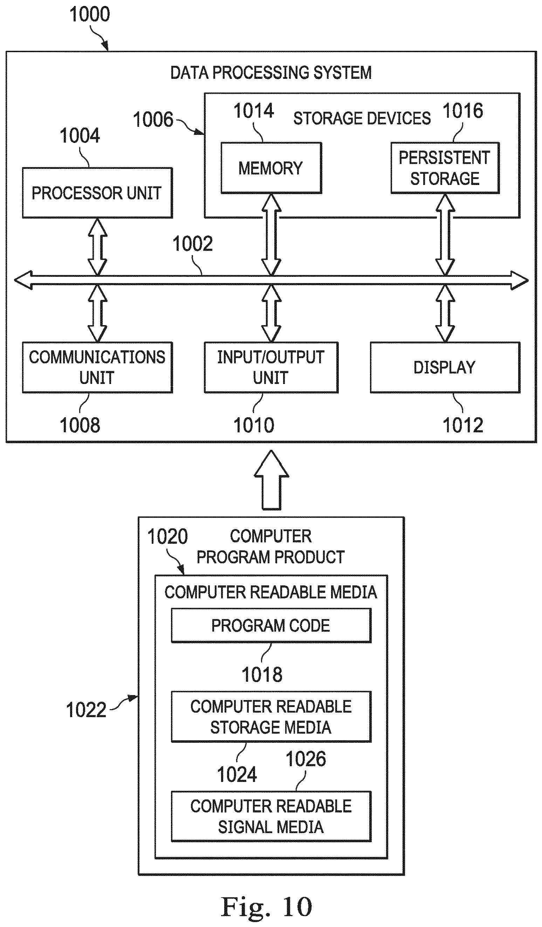

Turning now to **Figure 10**, an illustration of a data processing system in the form of a block diagram is depicted in accordance with an illustrative embodiment. Data processing system **1000** may be used to implement computer system **124** in **Figure 1**. As depicted, data processing system **1000** includes communications framework **1002,** which provides communications between processor unit **1004,** storage devices **1006**, communications unit **1008**, input/output unit **1010**, and display **1012**. In some cases, communications framework **1002** may be implemented as a bus system.

Processor unit **1004** is configured to execute instructions for software to perform a number of operations. Processor unit **1004** may comprise a number of processors, a multiprocessor core, and/or some other type of processor, depending on the implementation. In some cases, processor unit **1004** may take the form of a hardware unit, such as a circuit system, an application specific integrated circuit (ASIC), a programmable logic device, or some other suitable type of hardware unit.

Instructions for the operating system, applications, and/or programs run by processor unit **1004** may be located in storage devices **1006**. Storage devices **1006** may be in communication with processor unit **1004** through communications framework **1002**. As used herein, a storage device, also referred to as a computer readable storage device, is any piece of hardware capable of storing information on a temporary and/or permanent basis. This information may include, but is not limited to, data, program code, and/or other information.

Memory **1014** and persistent storage **1016** are examples of storage devices **1006**. Memory **1014** may take the form of, for example, a random access memory or some type of volatile or non-volatile storage device. Persistent storage **1016** may comprise any number of components or devices. For example, persistent storage **1016** may comprise a hard drive, a flash memory, a rewritable optical disk, a rewritable magnetic tape, or some combination of the above. The media used by persistent storage **1016** may or may not be removable.

Communications unit **1008** allows data processing system **1000** to communicate with other data processing systems and/or devices. Communications unit **1008** may provide communications using physical and/or wireless communications links.

Input/output unit **1010** allows input to be received from and output to be sent to other devices connected to data processing system **1000**. For example, input/output unit **1010** may allow user input to be received through a keyboard, a mouse, and/or some other type of input device. As another example, input/output unit **1010** may allow output to be sent to a printer connected to data processing system **1000**.

Display **1012** is configured to display information to a user. Display **1012** may comprise, for example, without limitation, a monitor, a touch screen, a laser display, a holographic display, a virtual display device, and/or some other type of display device.

In this illustrative example, the processes of the different illustrative embodiments may be performed by processor unit **1004** using computer-implemented instructions. These instructions may be referred to as program code, computer usable program code, or computer readable program code and may be read and executed by one or more processors in processor unit **1004**.

In these examples, program code **1018** is located in a functional form on computer readable media **1020**, which is selectively removable, and may be loaded onto or transferred to data processing system **1000** for execution by processor unit **1004**. Program code **1018** and computer readable media **1020** together form computer program product **1022**. In this illustrative example, computer readable media **1020** may be computer readable storage media **1024** or computer readable signal media **1026**.

Computer readable storage media **1024** is a physical or tangible storage device used to store program code **1018** rather than a medium that propagates or transmits program code **1018**. Computer readable storage media **1024** may be, for example, without limitation, an optical or magnetic disk or a persistent storage device that is connected to data processing system **1000**.

Alternatively, program code **1018** may be transferred to data processing system **1000** using computer readable signal media **1026**. Computer readable signal media **1026** may be, for example, a propagated data signal containing program code **1018**. This data signal may be an electromagnetic signal, an optical signal, and/or some other type of signal that can be transmitted over physical and/or wireless communications links.

The illustration of data processing system **1000** in **Figure 10** is not meant to provide architectural limitations to the manner in which the illustrative embodiments may be implemented. The different illustrative embodiments may be implemented in a data processing system that includes components in addition to or in place of those illustrated for data processing system **1000**. Further, components shown in **Figure 10** may be varied from the illustrative examples shown.

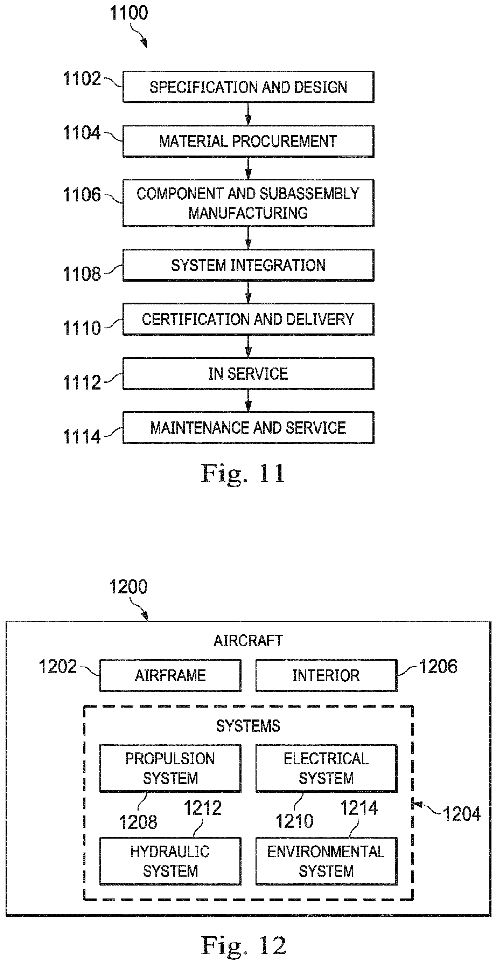

Illustrative embodiments of the disclosure may be described in the context of aircraft manufacturing and service method **1100** as shown in **Figure 11** and aircraft **1200** as shown in **Figure 12**. Turning first to **Figure 11**, an illustration of an aircraft manufacturing and service method is depicted in accordance with an illustrative embodiment. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** in **Figure 12** takes place. Thereafter, aircraft **1200** in **Figure 12** may go through certification and delivery **1110** in order to be placed in service **1112.** While in service **1112** by a customer, aircraft **1200** in **Figure 12** is scheduled for routine maintenance and service **1114**, which may include modification, reconfiguration, refurbishment, and other maintenance or service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12**, an illustration of an aircraft is depicted in which an illustrative embodiment may be implemented. In this example, aircraft **1200** is produced by aircraft manufacturing and service method **1100** in **Figure 11** and may include airframe **1202** with plurality of systems **1204** and interior **1206**. Examples of systems **1204** include one or more of propulsion system **1208**, electrical system **1210**, hydraulic system **1212**, and environmental system **1214**. Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1100** in **Figure 11****.** In particular, structure **104** from **Figure 1** may be manufactured during any one of the stages of aircraft manufacturing and service method **1100**. For example, without limitation, assembly **110** may be built using plurality of parts **102** during at least one of component and subassembly manufacturing **1106**, system integration **1108**, routine maintenance and service **1114**, or some other stage of aircraft manufacturing and service method **1100.** Further, supervision and inspection system **112** may provide automated supervision and inspection of the assembly process for building assembly **110**. Supervision and inspection system **112** may be used to automate the supervision and inspection of a structure that is part of airframe **1202**, interior **1206**, or some other portion of aircraft **1200**.

In one illustrative example, components or subassemblies produced in component and subassembly manufacturing **1106** in **Figure 11** may be fabricated or manufactured in a manner similar to components or subassemblies produced while aircraft **1200** is in service **1112** in **Figure 11**. As yet another example, one or more apparatus embodiments, method embodiments, or a combination thereof may be utilized during production stages, such as component and subassembly manufacturing **1106** and system integration **1108** in **Figure 11****.** One or more apparatus embodiments, method embodiments, or a combination thereof may be utilized while aircraft **1200** is in service **1112** and/or during maintenance and service **1114** in **Figure 11****.** The use of a number of the different illustrative embodiments may substantially expedite the assembly of and/or reduce the cost of aircraft **1200**.

Thus, the example embodiments provide automated systems and methods for supervision and inspection of an assembly process. Although the automated systems and methods for supervision and inspection may be used for the assembly of other types of vehicles and vehicle structures (e.g., automotive assembly, spacecraft assembly, etc.).

As used herein, the phrase "at least one of," when used with a list of items, means different combinations of one or more of the listed items may be used and only one of the items in the list may be needed. The item may be a particular object, thing, step, operation, process, or category. In other words, "at least one of' means any combination of items or number of items may be used from the list, but not all of the items in the list may be required. For example, without limitation, "at least one of item A, item B, or item C" or "at least one of item A, item B, and item C" may mean item A; item A and item B; item B; item A, item B, and item C; item B and item C; or item A and C. In some cases, "at least one of item A, item B, or item C" or "at least one of item A, item B, and item C" may mean, but is not limited to, two of item A, one of item B, and ten of item C; four of item B and seven of item C; or some other suitable combination.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for performing automated supervision and inspection of an assembly process, the method being implemented using a computer system and comprising:
generating sensor data at an assembly site using a sensor system positioned relative to the assembly site;
identifying, by the computer system, a current stage of an assembly process for building an assembly at the assembly site based on the sensor data;
identifying, by the computer system, a context for the current stage; and
generating, by the computer system, a quality report for the assembly based on the sensor data and the context for the current stage.

2. The method of claim 1,
wherein the context includes selected tolerances for a nominal condition for the assembly at the identified current stage; and/or
wherein the quality report includes assessments indicating whether at least one issue of interest is present.

3. The method of claim 1 or 2, wherein generating the sensor data comprises:
generating imaging data using a set of imaging systems positioned relative to the assembly and the assembly site, preferably wherein the imaging data is two-dimensional imaging data.

4. The method of claim 3, wherein identifying, by the computer system, the current stage of the assembly process comprises:
detecting, by the computer system, a plurality of objects using the imaging data; and
matching, by the computer system, at least a portion of the plurality of objects to parts for the assembly using at least one of images of the parts or models of the parts, wherein the portion of the plurality of objects matched to the parts is a plurality of matched objects, wherein matching, by the computer system, the at least a portion of the plurality of objects to the parts preferably comprises:
matching, by the computer system, the at least a portion of the plurality of objects to parts for the assembly using at least one of machine learning, deep learning, computer vision, a customized learning technique, computational learning, or artificial intelligence learning.

5. The method of claim 4, wherein identifying, by the computer system, the current stage of the assembly process further comprises:
determining, by the computer system, at least one of a plurality of locations and a plurality of orientations for the plurality of matched objects with respect to a reference coordinate system for the assembly site; and
determining, by the computer system, the current stage of the assembly process based on an identification of the plurality of matched objects and the at least one of the plurality of locations or the plurality of orientations for the plurality of matched objects, wherein identifying, by the computer system, the context preferably comprises:
determining, by the computer system, the context for the current stage of the assembly process using context information stored in a data repository, wherein the context further includes at least one of a nominal condition for the assembly at the current stage, a nominal condition for each part expected to be present at the current stage, an identification of steps completed prior to the current stage, an identification of steps to be completed during the current stage, or an identification of steps to be completed after the current stage.

6. The method of claim 5, wherein generating, by the computer system, the quality report comprises:
generating, by the computer system, a matching assessment that indicates whether one or more of the plurality of objects detected is unable to be matched to a corresponding part and whether one or more of the plurality of matched objects does not match a part that is expected to be present at the current stage of the assembly process.

7. The method of any of claims 5 or 6, wherein generating, by the computer system, the quality report comprises:
generating, by the computer system, a location assessment that indicates whether each of the plurality of matched objects has been assembled in a correct or incorrect location based on the context for the current stage of the assembly process.

8. The method of any of claims 5-7, wherein generating, by the computer system, the quality report comprises:
generating, by the computer system, an inconsistency assessment that indicates whether any features have been identified and whether any identified features are outside of selected tolerances, wherein a feature is selected from one of a crack, a dent, a twist, or a surface level feature, preferably further comprising:
detecting, by the computer system, one or more features in the assembly using at least one of machine learning, deep learning, computer vision, a customized learning technique, computational learning, or artificial intelligence learning.

9. The method of any of the previous claims further comprising:
generating, by the computer system, guidance information for guiding a human operator during the assembly process based on the context for the current stage of the assembly process, preferably wherein generating, by the computer system, the guidance information comprises:
generating, by the computer system, current stage guidance for use by the human operator to perform one or more tasks during the current stage of the assembly process, the current stage guidance including instructions on how to perform certain tasks for the current stage, and/or wherein generating, by the computer system, the guidance information comprises:
generating, by the computer system, next stage guidance for use by the human operator to perform one or more tasks during a next stage of the assembly process, the next stage guidance including instructions on how to perform certain tasks for the next stage, and/or further comprising:
displaying the guidance information on a display system positioned relative to the assembly site.

10. The method of any of the previous claims, further comprising:
storing, by the computer system, the quality report as part of a record corresponding to the current stage of the assembly process in a data repository to thereby build a history of records for the assembly process, preferably further comprising:
determining, by the computer system, whether the quality report for the current stage of the assembly process indicates that an issue of interest is present; and
rolling back through the history of records, via the computer system, to identify a root cause of the issue of interest, more preferably wherein rolling back through the history of records comprises:
analyzing, by the computer system, a first record corresponding to a selected stage of the assembly process immediately prior to the current stage of the assembly process, still more preferably wherein rolling back through the history of records further comprises:
determining, by the computer system, whether the root cause occurred during the selected stage; and
analyzing, by the computer system, a second record corresponding to another stage of the assembly process immediately prior to the selected stage.

11. The method of any of the previous claims:
wherein identifying, by the computer system, a current stage of an assembly process for building an assembly at the assembly site is performed using the sensor data, assembly information stored in a data repository, and at least one of machine learning, deep learning, computer vision, a customized learning technique, computational learning, or artificial intelligence learning; the method further comprising:
storing, by the computer system, a record corresponding to the current stage of the assembly process in the data repository to thereby build a history of records for the assembly process, wherein the record includes at least a portion of the sensor data and the quality report, preferably further comprising:
determining, by the computer system, whether the quality report for the current stage of the assembly process indicates that at least one issue of interest is present, wherein the at least one issue of interest is selected from one of an improper part, an improper part location, an improper orientation, a crack, a dent, a twist, and a surface inconsistency, more preferably further comprising:
rolling back through the history of records, via the computer system, to identify a root cause of the at least one issue of interest.

12. The method of claim 11, further comprising:
generating, by the computer system, at least one of current stage guidance or next stage guidance for use by a human operator during the assembly process, the current stage guidance including instructions on how to perform certain tasks for the current stage and the next stage guidance including instructions on how to perform certain tasks for the next stage, preferably then further comprising:
displaying, by the computer system, the at least one of the current stage guidance or the next stage guidance on a display system, and/or further comprising:
presenting, by the computer system, at least a portion of the quality report on a display system to inform a human operator of the quality report.

13. A system for automated supervision and inspection of an assembly process, the system comprising:
a sensor system positioned relative to an assembly site and an assembly being built at the assembly site; and
a computer system that identifies a current stage of the assembly process for building the assembly at the assembly site based on sensor data generated by the sensor system; identifies a context for the current stage; and generates a quality report for the assembly based on the sensor data and the context for the current stage,
wherein the context includes selected tolerances for a nominal condition for the assembly at the identified current stage, and the quality report includes assessments indicating whether at least one issue of interest is present.

14. The system of claim 13, wherein the sensor system includes at least one camera positioned relative to the assembly site and wherein the camera generates two-dimensional imaging data.

15. The system of claim 13 or 14, wherein computer system identifies the current stage of the assembly process using the sensor data, assembly information stored in a data repository, and at least one of machine learning, deep learning, computer vision, a customized learning technique, computational learning, or artificial intelligence learning, wherein the assembly information preferably includes at least one of a part images library, a part models library, assembly process flow data, assembly site model data, assembly model data, assembly video data, or feature data, and/or wherein the context preferably further includes at least one of a nominal condition for the assembly at the current stage, a nominal condition for each part expected to be present at the current stage, an identification of steps completed prior to the current stage, an identification of steps to be completed during the current stage, or an identification of steps to be completed after the current stage.
